# EUROPEAN PATENT SPECIFICATION

(11) **EP 1 405 769 B1**
(45) Date of publication and mention of the grant of the patent: **03.08.2005**
(21) Application number: 02022039.8
(22) Date of filing: 01.10.2002
(51) Int. Cl.: B60R 21/00

(54) **A motor vehicle multimedia and telematic system including a navigation system**
Multimedia- und Telematiksystem einschliesslich Navigationssystem für Motorfahrzeuge
Système multimedia et télématique incluant un système de navigation pour véhicule automobile

(43) Date of publication of application: 07.04.2004
(73) Proprietor: SIEMENS AKTIENGESELLSCHAFT, 80333 München (DE)
(72) Inventor: Hermann, Stefan, 93096 Koefering (DE)

(56) References cited:
- EP-A- 0 663 324
- DE-A- 10 026 918
- DE-A- 10 058 594
- US-A1- 2001 016 789

## Description

A motor vehicle multimedia and telematic system including a navigation system with a main processor for multimedia and navigation calculations and for first security-critical calculations result data and a secondary processor for second security-critical calculations, wherein the processing outputs security-critical result data after validation among said first and second security-critical calculations

The invention relates to a multimedia and telematic system including a navigation system for a motor vehicle and comprising sensor means for sensing one or more environmental and/or vehicle-associated parameter values, processing means fed by said sensor means and including data and program storage facilities, presentation means fed by said processing means for presenting various multimedia-based results to an operator, and actuator signal output means fed by said processing means for outputting one or more actuator control signals for controlling one or more associated safety-related devices. The sensed or derived parameter values may include such items as air and road temperature, air humidity, vehicle speed, vehicle acceleration, vehicle position and orientation, vehicle seat adjustment, safety belt fixation, and others. Present-day vehicle control systems are using such and other parameter values for various purposes, such as for controlled braking, airbag activating, generating warning signals, and other that are generally related to safety of driver and/or vehicle. A state-of-the-art system for executing such security-related measures has been disclosed in European Patent Application 0 663 324 A1.

Furthermore, the generally increasing usage of digital technology in vehicles has also led to introducing various multi-media based interfacings to an operator or user, such as the displaying of maps in the ambit of a vehicle navigation system, the generating of advice items regarding points-of-interest, messages regarding traffic conditions, weather forecasts, e-mailing, the generating of speech output and/or recognizing operator speech, and various other applications. The present inventor has recognized the great computational and communication workload imposed by such multi-media applications on the generally "main" data processing facilities that are present in such vehicle, but which nevertheless have a quite restricted processing power. In particular, the technical security of such multimedia processing operations is often less than perfect, both in terms of hardware and in terms of software. Various errors could occur, such as through atmospheric interference on external connections, internal communication bus collisions, memory or processing faults, software bugs and various others. The temporal duration of such errors or faults can vary enormously from transient errors in the microsecond region to such that can persist for an undefined long time. In practical use, most of the errors so generated viz á viz the multimedia interfacing would hardly be felt by the operator. Even if otherwise, time-consuming countermeasures, such as a correctional repeat of the operation in question would generally not represent a problem.

On the other hand, in the case of using the processing operations for the above safety-related facilities, the occurrence of an error could lead to serious, and sometimes even dangerous, consequences. Nevertheless, the usage of the above "main" processing hardware and software will generally present a great advantage. In fact, most of the time, the overall safety of driver/passenger(s) and vehicle will not represent a problem whatsoever. Furthermore, the power of the main processor facility will allow for fast repetition of these safety-related calculations, and/or getting the output result with high-quality resolution. Effectively, the present inventor has therefore recognized the need for a "second line of defence" that would on relatively short notice signal such processing errors that could have an impact on the safety-related operations and take correctional action as quickly as possible, but that would leave the multimedia-related operations alone.

In consequence, amongst other things, it is an object of the present invention to provide the main data processing facilities with a secondary data processing facility that generally restricts to executing less data-processing intensive tasks, and in particular, safety-related data processing tasks, and to signal on appropriately short notice any sizeable discrepancy between the two data processing subsystems.

Now therefore, according to one of its aspects the invention is characterized in that said processing means comprise a main processor unit for executing multimedia and navigation calculations and furthermore first security-related calculations, and said system comprises furthermore a secondary processor unit for executing second security-related calculations, wherein said main processor unit has a first output for outputting multi-media result data and a second output for outputting first security-related result data and in that the secondary processor has a third output for outputting second security-related result data, wherein said processing means furthermore comprise validation means fed by said first and second critical result data for on the basis thereof selectively enabling a further output for outputting results based on said first security-related calculations. In consequence, the processing in the second processor unit would not by itself allow executing ***all*** security-related calculations, but only a selection thereof. Thereupon, some measure of ***com*****paring** with the security-related calculations in the main processor unit would indicate the correct nature of the latter calculations or otherwise.

A preferred embodiment of a multimedia and telematic system including a navigation system according to the invention is characterized in that said main and secondary processor units receive identical sets of sensor signals.

Alternative preferred embodiments of a multimedia and telematic system according to the invention are characterized in that said main and secondary processor units receive mutually exclusive sets of sensor signals or are sharing a subset of the overall set of sensor signals.

According to another aspect of the invention, said secondary processor unit recurrently calculates at least one critical security datum of a current speed and a current position of said motor vehicle.

Such multimedia and telematic system may preferably be characterized in that said secondary processor unit calculates a particular critical security-related datum at a greater re-currency spacing than does said main processor unit, or alternatively in that said secondary processor unit calculates a particular critical security-related datum at a lower resolution than does said main processor unit.

According to yet another aspect of the invention, said multi-media and telematic system is preferably characterized by effecting short-term validation at a different tolerance value from long term validation.

To prevent jittered non-validation from occurring, a preferred embodiment of the above multimedia and telematic system according to the invention is characterized by a hysteresis facility.

The invention also relates to a navigation system for use in a multimedia and telematic system as well as to a motor vehicle arranged with such a navigation system or with a multi-media and telematic system as claimed in Claim 1.

These and further aspects and advantages of the invention will be discussed more in detail hereinafter with reference to the disclosure of preferred embodiments, and in particular with reference to the appended Figures that show:
- Figure 1,: a succinct diagram of the overall processing schedule of a multimedia and telematic system including a navigation system according to the invention;
- Figure 2,: a diagram of the filtering arrangement for use in the multimedia and telematic system referred to in Figure 1;
- Figure 3,: a first assignment schedule of sensor data;
- Figure 4,: a second assignment schedule of sensor data;
- Figure 5,: a third assignment schedule of sensor data;
- Figure 6,: a motor vehicle provided with a multimedia and telematic system according to the present invention;
- Figures 7a, 7b,: two functional arrangements regarding the signal validation.

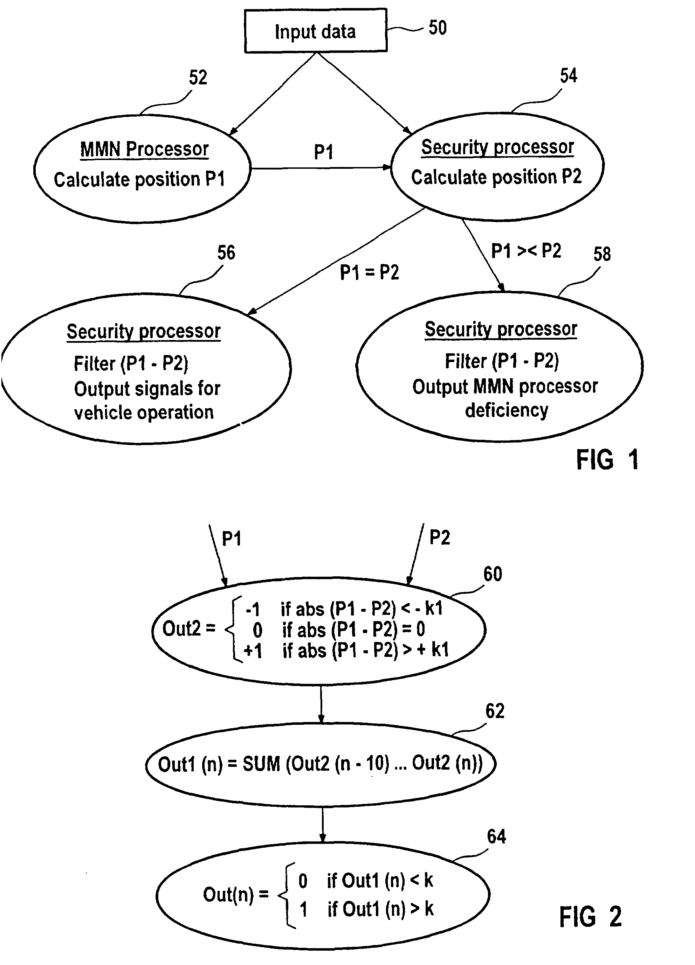

Figure 1 illustrates a succinct diagram of the overall processing schedule regarding the security-related calculations applied in a multimedia and telematic system according to the invention. The input sensor signals are represented by block 50. From these, in block 52, the main or multimedia (MMN) processor will calculate the actual vehicle position **P1**. Likewise, in block 54, the secondary or security processor will calculate the actual vehicle position **P2**. Next, the two actual positions **P1**, **P2**, will be checked for correspondence or non-correspondence. This will be explained more in detail with reference to figure 2 hereinafter. If correspondence, **P1 = P2**, in block 56, the security processor will execute a filtering operation on **( P1 - P2 )**. If the outcome of the filtering is positive, in block 56, the necessary control signals for the appropriate vehicle operation will be outputted. If block 54 finds non-correspondence between **P1** and **P2**, in block 58 the security processor will again execute the filtering operation. Eventually, the outcome of the filtering may or may not signal that the main processor is malfunctioning.

Figure 2 illustrates a diagram of the filtering arrangement, of which the overall situating has been discussed with reference to Figure 1.
First, in block 60, the difference between the absolute values of **P1** and **P2** is calculated. Note that the output results **P1**, **P2** from the processing can be signed quantities. Next, the difference between the absolute values of **P1** and **P2** is compared with a threshold **k1**, and a first tri-valent output quantity **Out2** is produced.
Next, in block 62 a temporal sequence of values for the quantity Out2 is summed, in this case for eleven successive instants, to so produce the quantity **Out2(n)**, which should then lie in the interval **[ -11 , +11 ]**.
Next, the resulting value for **Out1(n)** is compared to a threshold **K**, and a final binary **Out(n)** is generated according to the expression in ellipse 64. Here of course, the absolute value of the summed differences **Out1(n)** is used. For the values of **k1** and **K**, appropriate quantities should be taken that can be derived by experiment.

The various thresholds could include a hysteresis, in that excess of the threshold should either in time, or in extent represent an anti-jitter barrier, whereas also the termination of such excess should represent a certain interval, or a sub-threshold amount, respectively. Also, if more than one result category is used for the validating, the above intervals should consider the degree of danger that a discrepancy would represent. For example, for anti-collision or braking control the interval should be brief, such a small fraction of a second. On the other hand, regarding to the signalling that the vehicle driver should change lanes or make some other manoeuvre, the interval may be appreciably longer, such as a few seconds. Finally, the momentary threshold value may differ from a threshold value related to a time average.

Instead of the vehicle positions **P1, P2**, other sensed or derived parameter values could be used, such as the vehicle speed. Furthermore, the main processor unit 28 and the security processor unit 30 need not to process a ***complete identical set*** of security-related parameters, provided that the parameter values considered for the validation, should in fact be the same. Also for calculating a particular parameter vale, the main and security processor units should not by necessity use the same ***algorithms,*** or should even use the same ***measurement*** values for those same parameters.

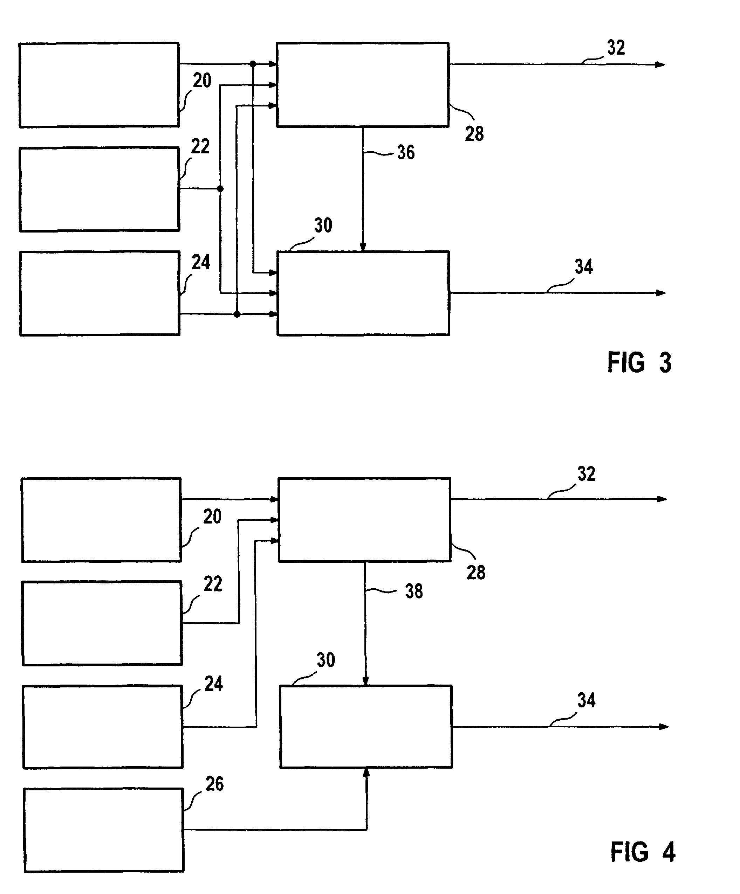

Figure 3 illustrates a first assignment schedule of sensor data. In this schedule, both main processor unit 28 for multimedia and navigation calculations, and also secondary processor 30 for critical security calculations receive identical sets of sensor signals, to wit, from GPS-based position sensor 20, Gyro-based directional sensor 22, and Odometer-based speed sensor 24. Output 32 for non-security-critical result data emanates directly from main processor 28. Output 36 for security-critical result data feeds secondary processor 30. Output 34 for security-critical result data emanates from secondary processor 30 for presentation thereof to further subsystems not shown for brevity.

Figure 4 illustrates a second assignment schedule of sensor data. Here, main processor unit 28 for multimedia and navigation calculations, and secondary processor 30 for critical security calculations receive separate sets of sensor signals, the main processor receiving signals from GPS-based position sensor 20, Gyro-based directional sensor 22, and Odometer-based speed sensor 24, and the secondary processor 30 receiving signals from wheel-road sensor 26. The output from main processor 28 has been labelled 38 in that the composition of the signals thereon can differ from that on line 36 in Figure 3.

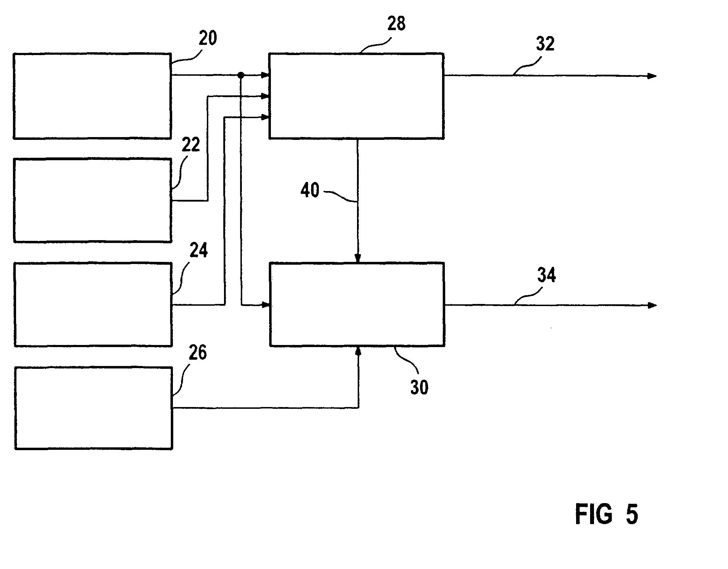

Figure 5 illustrates a third assignment schedule of sensor data. Here, main processor unit 28 for multimedia and navigation calculations, and secondary processor 30 for critical security calculations receive mixed sets of sensor signals, the main processor receiving signals from GPS-based position sensor 20, Gyro-based directional sensor 22, and Odometer-based speed sensor 24, and the secondary processor 30 receiving signals from GPS-based position sensor 20 as well as from wheel-road sensor 26. The output from main processor 28 has been labelled 40 in that the composition of the signals thereon can differ from that on lines 36, 38 in Figures 3 and 4.

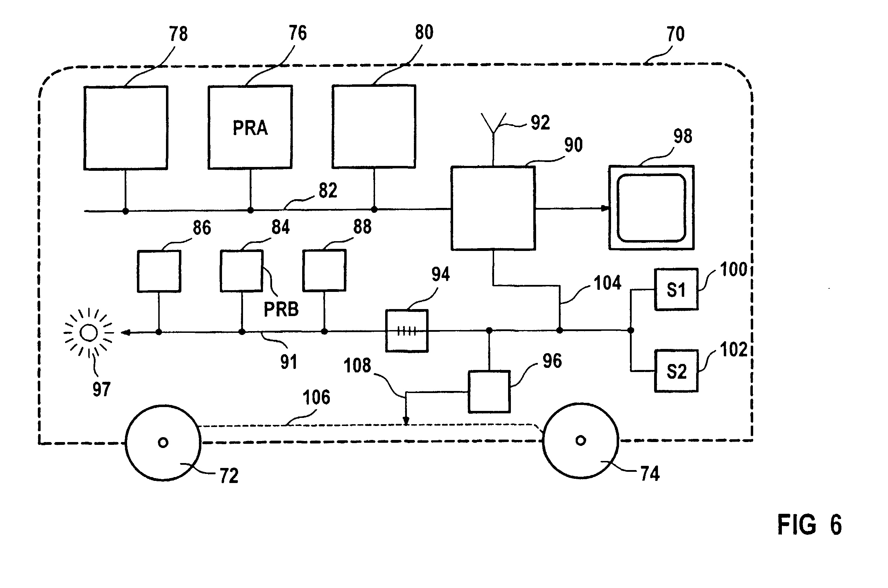

Figure 6 illustrates a motor vehicle provided with a navigation system of the present invention. For brevity, the vehicle proper has been represented in a schematic manner only, through its overall body 70, and its front and rear wheels 72, 74.

Furthermore, the vehicle data processing facilities include the following. Main processing system has processor unit 76, program storage 78, data storage 80, communication bus 82, and I/O control unit 90. This processing system executes vehicle navigation through receiving GPS data on aerial 92, for producing actual vehicle position and speed, and furthermore calculates the display frames that should be displayed on display unit 98. For brevity, other multimedia applications have not been shown, but could include speech channels, cameras, and various DVD- and CD-based applications.

Apart therefrom, the main processing system calculates various parameter values that are critical for various security related vehicle subsystems, such as regarding airbag activation, automatic brake system, safety belt checking and safe-belt tightening under certain emergency conditions such as high acceleration, and other; for brevity, such functions have not been shown in detail.

Furthermore, secondary processing system has processor unit 84, program storage 86, data storage 88, communication bus 91, and I/O control unit 94. This processing unit has generally appreciably less computing power than the main system, but is nevertheless able to calculate certain security-related data, be it at a lower resolution and/or at longer time intervals and/or only a selection thereof. The choice of this resolution and temporal spacing could be open to the system designer. The security-related data could themselves relate to an emergency, such as an excess acceleration, or the data could by themselves not relate to a critical situation, but only in relation to other data. For example an excess acceleration could only in relation with a high speed lead to airbag activation. Furthermore, the system comprises various sensors S1 100 and S2 102 that could sense certain relevant parameters for being processed, as has been discussed supra.

The sensor related data are forwarded to the communication interface 90 of main processor unit 76, through communication interface 90 and internal bus 82.

Furthermore, the same information, or a fraction thereof is forwarded to interface 94 and communication bus 91 to processing unit 84. The safety-related parameter values are calculated in both processing units 76 and 84, and the ultimate values are compared in a communication interface unit 90, not further discussed for brevity. If corresponding, these will control communication unit 90 to transmit the various control values via line 104 to peripheral control unit 96 that will actuate such control values as are immediately necessary. The control signals through output 108 and interconnection 106 will control various actuators, such as those located on wheels 72, 74. In case of discrepancy between two results so calculated by both processor units 76, 84, the actuation signals to peripheral control unit 96 are deactivated, for example in that the automatic braking facility is suspended. Moreover, such situation is immediately signalled on warning device 97. Finally, if persisting, the dangerous situation could lead to such actions as effectively stopping the vehicle in a safe position.

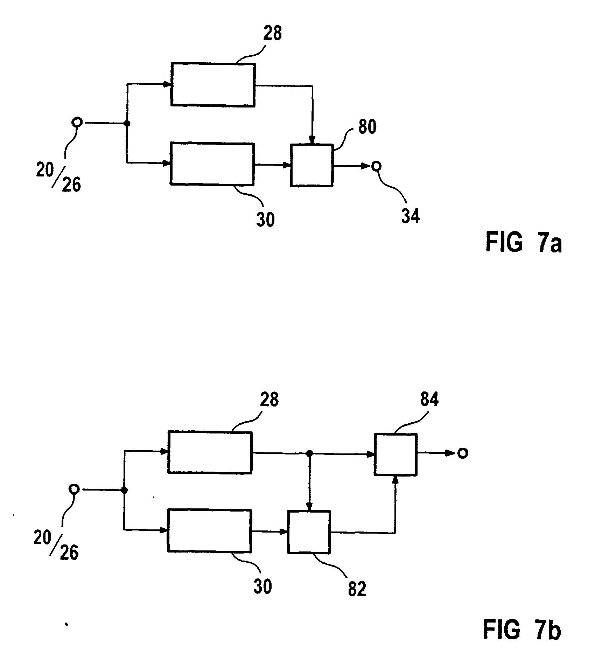

Figures 7a, 7b illustrate two functional arrangements regarding the execution of the signal validation. In both Figures, the following items correspond.

In Figure 7a, signal source 20/26, cf. Figures 3-5, will receive the various sensing values. These signals are forwarded to main processing unit 28 and/or security related processor 30, as shown. On the basis thereof, both main processing unit and secondary processing unit execute respective security-related processing. In Figure 7a, all first secondary security-related data are sent to checking element 80. Furthermore, also secondary security data from secondary processing unit 30 are sent to checking element 80. The check is executed between the second security-related values and a selection from the first security related values. If the check is positive, all data received from processing unit 28 in element 80, will be transferred to output 34 for subsequent use.

In Figure 7b, all first security-related values are sent to gating unit 84, and only a selection therefrom is sent to check unit 82. If the check is positive, gate unit 84 will be opened; if negative, it will be blocked. In both Figures, the multi-media processing operations and associated result data have been left our of consideration. Note that the latter could share physical transfer channels, so that the inputs and outputs of the security-related data are logical channels.

In the above, the present invention has been described with reference to a disclosure and drawings that illustrate a preferred embodiment. Persons skilled in the art would however from inspecting thereof recognize various changes and amendments to such preferred embodiment. Therefore, the disclosure herein should be considered by way of example, rather than by way of restriction, and the due scope of the present invention should be determined from the Claims appended hereto.

## Claims

1. A multimedia and telematic system including a navigation system for a motor vehicle and comprising sensor means (20-26) for sensing one or more environmental and/or vehicle-associated parameter values, processing (28, 30) means fed by said sensor means and including data and program storage facilities, presentation means (32) fed by said processing means (26) for presenting various multimedia-based results to an operator, and actuator signal output means (34) fed by said processing means (28, 30) for outputting one or more actuator control signals for controlling one or more associated safety-related devices, said system being **characterized in that** said processing means comprise a main processor unit (28) for executing multimedia and navigation calculations and furthermore first security-related calculations, and said system comprises furthermore a secondary processor unit (30) for executing second security-related calculations, wherein said main processor unit (28) has a first output (32) for outputting multi-media result data and a second output (36) for outputting first security-related result data and **in that** the secondary processor has a third output for outputting second security-related result data, wherein said processing means furthermore comprise validation means (80, 82) fed by said first and second critical result data for on the basis thereof selectively enabling a further output (34) for outputting results based on said first security-related calculations.

2. A multimedia and telematic system as claimed in Claim 1, **characterized in that** said main (28) and secondary (30) processor units receive identical sets of sensor signals.

3. A multimedia and telematic system as claimed in Claim 1, **characterized in that** said main (28) and secondary (30) processor units receive mutually exclusive sets of sensor signals.

4. A multimedia and telematic system as claimed in Claim 1, **characterized in that** said main (28) and secondary (30) processor units are sharing a subset of the overall set of sensor signals.

5. A multimedia and telematic system as claimed in Claim 1, **characterized in that** said secondary processor unit (30) recurrently calculates at least one critical security datum of a current speed and a current position of said motor vehicle.

6. A multimedia and telematic system as claimed in Claim 5, **characterized in that** said secondary (30) processor unit calculates a particular critical security-related datum at a greater re-currency spacing than does said main (28) processor unit.

7. A multimedia and telematic system as claimed in Claim 5, **characterized in that** said secondary (30) processor unit calculates a particular critical security-related datum at a lower resolution than does said main (28) processor unit.

8. A multimedia and telematic system as claimed in Claim 1, **characterized by** effecting short-term validation at a different tolerance value from long term validation.

9. A multimedia and telematic system as claimed in Claim 1, **characterized by** a hysteresis facility for preventing jittered non-validation.

10. A motor vehicle arranged with a multimedia and telematic system as claimed in Claim 1.

11. A motor vehicle as claimed in Claim 10, **characterized in that** said validation means are operative on respective vehicle position values calculated by the main and secondary processing units, respectively.

## Patentansprüche

1. Multimedia- und Telematiksystem mit einem Navigationssystem für ein Kraftfahrzeug und umfassend Sensormittel (20-26) zum Messen eines oder mehrerer umgebungsbezogener und/oder fahrzeugzugeordneter Parameterwerte, durch die Sensormittel gespeiste Verarbeitungsmittel (28, 30), die Daten- und Programmspeicherungseinrichtungen enthalten, durch die Verarbeitungsmittel (26) gespeiste Präsentationsmittel (32) zum Präsentieren verschiedener, auf Multimedia basierender Ergebnisse an einen Bediener und durch die Verarbeitungsmittel (28, 30) gespeiste Betätigungsgliedsignalausgabemittel (34) zum Ausgeben eines oder mehrerer Betätigungsglied-Steuersignale zur Steuerung einer oder mehrerer zugeordneter sicherheitsbezogener Einrichtungen, wobei das System **dadurch gekennzeichnet ist, daß** die Verarbeitungsmittel eine Hauptprozessoreinheit (28) zur Ausführung von Multimedia- und Navigationsberechnungen und ferner erste sicherheitsbezogene Berechnungen umfassen und das System weiterhin eine sekundäre Prozessoreinheit (30) zum Ausführen zweiter sicherheitsbezogener Berechnungen umfaßt, wobei die Hauptprozessoreinheit (28) einen ersten Ausgang (32) zum Ausgeben von Multimedia-Ergebnisdaten und einen zweiten Ausgang (36) zum Ausgeben erster sicherheitsbezogener Ergebnisdaten besitzt, und **dadurch**, daß der sekundäre Prozessor einen dritten Ausgang zum Ausgeben zweiter sicherheitsbezogener Ergebnisdaten besitzt, wobei die Verarbeitungsmittel ferner durch die ersten und zweiten kritischen Ergebnisdaten gespeiste Validierungsmittel (80, 82) umfassen, die auf der Basis dieser selektiv einen weiteren Ausgang (34) zum Ausgeben von Ergebnissen auf der Basis der ersten sicherheitsbezogenen Berechnungen freigeben.

2. Multimedia- und Telematiksystem nach Anspruch 1, **dadurch gekennzeichnet, daß** die Hauptprozessoreinheit (28) und die sekundäre Prozessoreinheit (30) identische Mengen von Sensorsignalen empfangen.

3. Multimedia- und Telematiksystem nach Anspruch 1, **dadurch gekennzeichnet, daß** die Hauptprozessoreinheit (28) und die sekundäre Prozessoreinheit (30) beidseitig elementfremde Mengen von Sensorsignalen empfangen.

4. Multimedia- und Telematiksystem nach Anspruch 1, **dadurch gekennzeichnet, daß** sich die Hauptprozessoreinheit (28) und die sekundäre Prozessoreinheit (30) eine Teilmenge der Gesamtmenge von Sensorsignalen teilen.

5. Multimedia- und Telematiksystem nach Anspruch 1, **dadurch gekennzeichnet, daß** die sekundäre Prozessoreinheit (30) rekursiv mindestens ein kritisches Sicherheitsdatenelement einer aktuellen Geschwindigkeit und einer aktuellen Position des Kraftfahrzeugs berechnet.

6. Multimedia- und Telematiksystem nach Anspruch 5, **dadurch gekennzeichnet, daß** die sekundäre Prozessoreinheit (30) ein bestimmtes kritisches sicherheitsbezogenes Datenelement mit einer größeren Rekursionsbeabstandung als die Hauptprozessoreinheit (28) berechnet.

7. Multimedia- und Telematiksystem nach Anspruch 5, **dadurch gekennzeichnet, daß** die sekundäre Prozessoreinheit (30) ein bestimmtes kritisches sicherheitsbezogenes Datenelement mit einer niedrigeren Auflösung als die Hauptprozessoreinheit (28) berechnet.

8. Multimedia- und Telematiksystem nach Anspruch 1, **gekennzeichnet durch** Bewirken einer Kurzzeitvalidierung mit einem anderen Toleranzwert als bei der Langzeitvalidierung.

9. Multimedia- und Telematiksystem nach Anspruch 1, **gekennzeichnet durch** eine Hystereseeinrichtung zum Verhindern einer gejitterten Nichtvalidierung.

10. Kraftfahrzeug, das mit einem Multimedia- und Telematiksystem nach Anspruch 1 angeordnet ist.

11. Kraftfahrzeug nach Anspruch 10, **dadurch gekennzeichnet, daß** die Validierungsmittel an jeweiligen Fahrzeugpositionswerten operieren, die durch die Haupt- bzw. sekundäre Verarbeitungseinheit berechnet werden.

## Revendications

1. Système multimédia et télématique, comprenant un système de navigation pour un véhicule automobile, et comportant des moyens de détection (20 à 26) pour détecter une ou plusieurs valeurs de paramètres associés aux conditions ambiantes et/ou au véhicule ; des moyens de traitement (28, 30), alimentés par lesdits moyens de détection et comprenant des dispositifs de mémorisation de données et de programmes ; des moyens de présentation (32), alimentés par lesdits moyens de traitement (26) pour présenter, à un utilisateur, divers résultats basés sur des multimédia ; et des moyens de sortie de signaux d'actionnement (34), alimentés par lesdits moyens de traitement (28, 30) pour fournir un ou plusieurs signaux de commande d'actionnement pour la commande d'un ou de plusieurs dispositifs associés et liés à la sécurité, ledit système étant **caractérisé par le fait que** lesdits moyens de traitement comprennent une unité centrale de traitement (28) pour l'exécution de calculs multimédia et de navigation et, en outre, de premiers calculs liés à la sécurité, et en ce que ledit système comprend en outre une unité secondaire de traitement (30) pour l'exécution de seconds calculs liés à la sécurité, dans lesquels ladite unité centrale de traitement (28) comporte une première sortie (32) pour fournir des données résultats multimédia, et une deuxième sortie (36) pour fournir des premières données résultats liées à la sécurité, et en ce que le processeur secondaire présente une troisième sortie pour fournir des deuxièmes données résultats liées à la sécurité, d ans lesquels lesdits moyens de traitement comprennent en outre des moyens de validation (80, 82), alimentés par lesdites premières et deuxièmes données résultats critiques afin d'activer sélectivement, sur la base de celles-ci, une autre sortie (34) pour fournir des résultats, basés sur lesdits premiers calculs liés à la sécurité.

2. Système multimédia et télématique selon la revendication 1, **caractérisé par le fait que** ladite unité centrale de traitement (28) et ladite unité secondaire de traitement (30) reçoivent des ensembles identiques de signaux provenant de capteurs.

3. Système multimédia et télématique selon la revendication 1, **caractérisé par le fait que** ladite unité centrale de traitement (28) et ladite unité secondaire de traitement (30) reçoivent des ensembles, mutuellement exclusifs, de signaux provenant de capteurs.

4. Système multimédia et télématique selon la revendication 1, **caractérisé par le fait que** ladite unité centrale de traitement (28) et ladite unité secondaire de traitement (30) partagent un sous-ensemble de l'ensemble global de signaux provenant de capteurs.

5. Système multimédia et télématique selon la revendication 1, **caractérisé par le fait que** ladite unité secondaire de traitement (30) calcule, de manière récurrente, au moins une donnée critique pour la sécurité, d'une vitesse actuelle et d'une position actuelle dudit véhicule automobile.

6. Système multimédia et télématique selon la revendication 5, **caractérisé par le fait que** ladite unité secondaire de traitement (30) calcule une donnée particulièrement critique liée à la sécurité, avec un plus grand intervalle de récurrence que ne le fait ladite unité centrale de traitement (28).

7. Système multimédia et télématique selon la revendication 5, **caractérisé par le fait que** ladite unité secondaire de traitement (30) calcule une donnée particulièrement critique liée à la sécurité, avec une précision moindre que ne le fait ladite unité centrale de traitement (28).

8. Système multimédia et télématique selon la revendication 1, **caractérisé par** l'exécution d'une validation à court terme, avec une valeur différente de tolérance par rapport à une validation à long terme.

9. Système multimédia et télématique selon la revendication 1, **caractérisé par** un moyen à hystérésis, pour éviter que ne se produise une non-validation par gigue.

10. Véhicule automobile, pourvu d'un système multimédia et télématique selon la revendication 1.

11. Véhicule automobile selon la revendication 10, **caractérisé par le fait que** lesdits moyens de validation opèrent sur des valeurs respectives de position du véhicule, calculées respectivement par l'unité centrale de traitement et par l'unité secondaire de traitement.
